# EUROPEAN PATENT APPLICATION

(11) **EP 4 789 924 A1**
(43) Date of publication of application: **12.08.2026**
(21) Application number: 26157042.8
(22) Date of filing: 06.02.2026
(51) Int. Cl.: B60R 16/023

(54) **POWER DISTRIBUTION UNIT WITH HETEROGENEOUS FEEDTHROUGH**

(30) Priority: 10.02.2025 CN 202510145068
(71) Applicant: Suzhou Littelfuse OVS Co., Ltd., Suzhou Jiangsu 215021 (CN)
(72) Inventor: Liu, Renan, Suzhou, 215021 (US); Pan, Shangchun, Suzhou, 215021 (US)
(74) Representative: Arnold & Siedsma

(57) **Abstract**

A housing for an electrical device or electronic device is provided. The housing may include a chamber wall, a feedthrough portion, attached to the chamber wall, and a bushing, disposed within the feedthrough portion, and defining a high voltage passage therethrough.

## Description

### Background

### Field

The disclosure relates to the field of power distribution units, and in particular, to housing for power distribution units.

### Discussion of Related Art

High-voltage (HV) power distribution units (PDUs) are arranged to deliver power to certain loads within electric vehicles. A PDU may be used to distribute power to loads while protecting against short circuits, crash events or other faults. In some examples, a HV PDU may be used to safely, reliably, and efficiently distribute power from a high-voltage battery module to the high-voltage systems of a vehicle.

Such PDUs may include a metal housing, such as an aluminum material, that includes a high voltage feedthrough, where a conductor such as a cable, wire, or other element is connected to components inside the metal housing. The feedthrough may include a threaded hole that is formed in the aluminum housing. Such threaded holes may be damaged during installation if excessive torque is applied to fasten an external component in the feedthrough. Additionally, any damaged threaded hole may be very difficult to rework, leading to the need to send the whole PDU out for reworking.

In view of the above, the present disclosure is provided.

### Brief Summary

A housing for an electrical device or electronic device is provided. The housing may include a chamber wall, a feedthrough portion, attached to the chamber wall, and a bushing, disposed within the feedthrough portion, and defining a high voltage passage therethrough.

A power distribution unit is provided. The power distribution unit may include a housing, and a set of components, disposed within the housing. The housing may include a chamber wall, a feedthrough portion, attached to the chamber wall, and a bushing, disposed within the feedthrough portion, and defining a high voltage passage therethrough.

### Brief Description of the Drawings

**FIG. 1A****-** illustrates a perspective view of a power distribution unit housing, according to the disclosure;
**FIG. 1B** depicts a close-up view of a high voltage feedthrough of the power distribution unit of FIG. 1A;
**FIG. 1C** depicts a close-up view of a bushing for the high voltage feedthrough of FIG. 1B;
**FIG. 1D** depicts a side cross-sectional view of the high voltage feedthrough of FIG. 1B;
**FIG. 1E** depicts details of the image of FIG. 1D;
**FIG. 1F** is a top view of the housing of FIG. 1A;
**FIG. 1G** depicts a side view of the housing of FIG. 1A during fabrication;
**FIG. 2A****-** illustrates a perspective view of another power distribution unit housing, according to the disclosure;
**FIG. 2B** depicts a close-up view of a high voltage feedthrough of the power distribution unit of FIG. 2A;
**FIG. 2C** depicts a close-up view of a bushing for the high voltage feedthrough of FIG. 2B;
**FIG. 2D** depicts a side cross-sectional view of the high voltage feedthrough of FIG. 2B;
**FIG. 3A** depicts a side cross-sectional view of a bushing for a high voltage feedthrough, according to the disclosure;
**FIG. 3B** depicts a side cross-sectional view of the bushing of FIG. 3A as installed in a housing to form a high voltage feedthrough;
**FIG. 4A** depicts a side view of a bushing for a high voltage feedthrough, according to the disclosure;
**FIG. 4B** depicts a side cross-sectional view of a portion of a chamber wall to accommodate the bushing of FIG. 4A to form a high voltage feedthrough;
**FIG. 4C** depicts a side cross-sectional view of the chamber wall with the bushing of FIG. 4A installed;
**FIG. 5A** depicts a side cross-sectional view of a high voltage feedthrough having a first bushing according to the disclosure;
**FIG. 5B** depicts a side cross-sectional view of a high voltage feedthrough having a second bushing according to the disclosure;
**FIG.5C** depicts a perspective view of a high voltage feedthrough including an external gland, according to the disclosure;
**FIG.5D** depicts a side cross-sectional view of one variant of the high voltage feedthrough of FIG. 5C;
**FIG. 6** provides an exemplary process flow; and
**FIG. 7** provides another exemplary process flow.

### Description

The disclosure will now be described more fully hereinafter with reference to the accompanying drawings. In the drawings, like numbers refer to like elements throughout.

In the following description and/or claims, the terms "on," "overlying," "disposed on" and "over" may be used in the following description and claims. "On," "overlying," "disposed on" and "over" may be used to indicate that two or more elements are in direct physical contact with one another. Also, the term "on,", "overlying," "disposed on," and "over", may mean that two or more elements are not in direct contact with one another. For example, "over" may mean that one element is above another element while not contacting one another and may have another element or elements in between the two elements. Furthermore, the term "and/or" may mean "and", it may mean "or", it may mean "exclusive-or", it may mean "one", it may mean "some, but not all", it may mean "neither", and/or it may mean "both", although the scope of claimed subject matter is not limited in this respect.

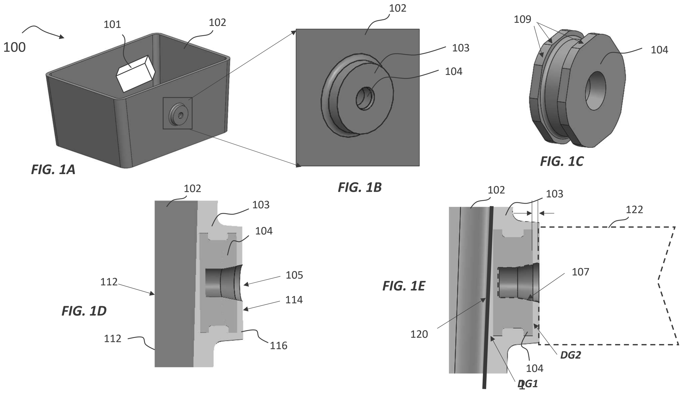

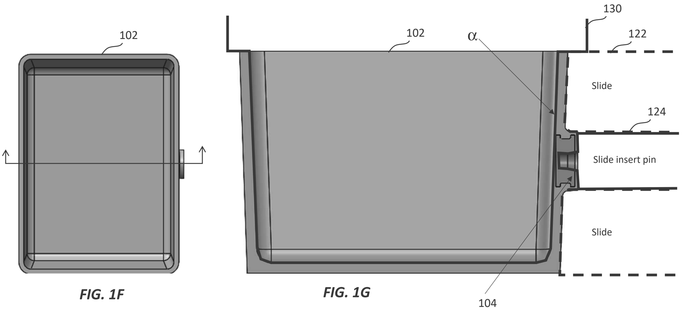

A novel power distribution unit and PDU housing is provided. **FIG. 1A****-** illustrates a perspective view of a power distribution unit housing, shown as housing 100. This housing may be used to include a set of components 101 for use in electrical or electronic products, including PDUs as known in the art, an may include such components as fuses, relays, connectors, other electrical devices, and so forth. The housing 100 may be used especially suitable for use in HV PDUs, where feedthroughs are arranged within a wall of a housing. according to the disclosure. The housing 100 may include a chamber wall 102 that may extend so as to form a generally rectangular structure as shown. The housing 100 may further include a feedthrough portion 103 that may extend outside of the chamber wall 102, as shown. The housing 100 may also include a bushing 104. As shown in FIG. 1B, in particular, the bushing 104 may be circumferentially enclosed by the feedthrough portion 103. In other words, the bushing 104 is surrounded by the feedthrough portion 103. The bushing 104 and feedthrough portion 103 each have an opening that define an aperture 105 that may extend into an interior of the chamber wall 102, as further shown in FIG. 1D.

The chamber wall 102 and feedthrough portion 103 may be made of an aluminum material such as aluminum metal or a metal alloy of aluminum. The bushing 104 may be made of a steel material or other suitable high strength metal. The chamber wall 102 and feedthrough portion 103 may be formed of a cast material. In FIG. 1A-FIG. 1G, the metal material of the feedthrough portion may be formed in a molding process where the bushing 104 is encapsulated during the molding. As shown in FIG. 1D, an outer portion 116 of the feedthrough portion 103 covers the outer side of the bushing 104, on an outside surface 114 that is opposite an inside surface 112 of the chamber wall 102. The outer portion 116 that extends over the bushing 104 provides some aluminum or other metal that will maintain a good sealing surface. Note that the aperture 105 may have a tapered shape as shown, which shape may sustain relatively higher stress.

The bushing 104 may be encapsulated within the housing 100 without the bushing 104 being threaded. The inner surface 107 may then be subsequently threaded before final assembly to an external gland. The threading of the inner surface 107 after casting avoids possible damage to threads during the high temperature processing that takes pace during casting of the housing 100.

The bushing 104 may include flat external surfaces, shown as surfaces 109, which surfaces may provide anti-rotation properties to the bushing 104.

Turning to **FIG. 1E**, during fabrication (with a slide 122 shown), the kiss surface 120 may be slanted with respect to the inner surface of the bushing 104. Note that it is hard to design a slant surface for a bushing in order to kiss with a casting core block. So, here, the gap DG1 provides a means to avoid the mold collision issue.

Turning to **FIG. 1G** depicts a side view of the housing of FIG. 1A during fabrication (with a slide 122 and slide input pin 122 shown). As shown, during casting of the housing 100, a casting tooling includes a core block 130 that defines a casting angle a with respect to a vertical, where the bushing 104 may have the inner surface aligned with the vertical.

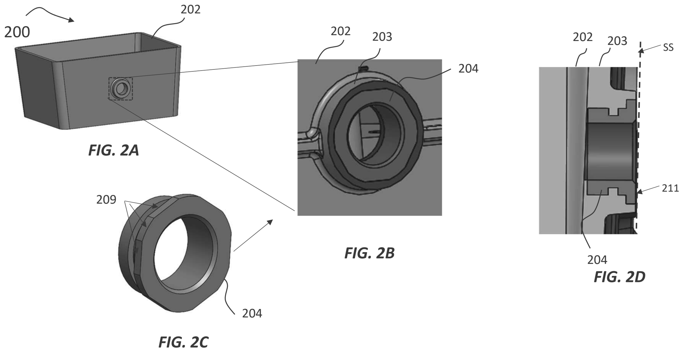

**FIG. 2A****-** illustrates a perspective view of another power distribution unit housing, according to the disclosure. In this example, the chamber wall 202 of the housing 200 may be similar to the chamber wall 102, as described above. As shown in **FIG. 2B, FIG. 2C** and **FIG.** 2D, a bushing 204 is provided within a feedthrough portion 203. As with FIG. 1A-FIG. 1G, the bushing 204 is overmolded so as to be molded within the housing 200, as particularly shown in FIG. 2D. Thus, material of the feedthrough portion 203 moves into the notches of the bushing 204 to lock the bushing 204 in place. Again, the bushing 204 may be provided with flat surfaces 209 that provide anti-rotation properties to the bushing 204. Material of the feedthrough portion 203 may not cover the outer surface 211 of the bushing 204. In particular, an external side of the feedthrough portion 203 is disposed flush with an outer side of the bushing 204. Thus, the design may be relatively simpler than the design of FIG. 1A.

As with FIG. 1A, this provides a stronger material for the threaded portion of the housing to avoid thread damage that may occur in the case where a feedthrough is provided by threading relatively softer material of the chamber wall 102 or chamber wall 202, such as aluminum.

Because of the uncovered part of bushing 204 in this structure, the outer sealing surface SS of the feedthrough as a whole presents aluminum or similar material of feedthrough portion 203 as well as steel or similar material of bushing 204. Because dissimilar materials define the outer sealing surface SS of housing 200, the sealing properties may be inferior to the properties of of FIG. 1A. This may be more suitable for applications where the sealing requirement is not as stringent as in FIG. 1A.

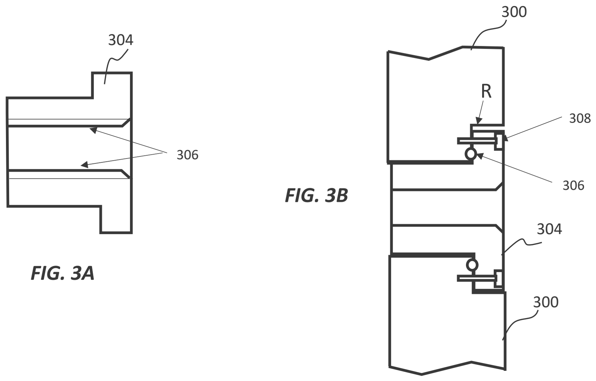

Turning to **FIG. 3A** there is shown a side cross-sectional view of a bushing 304 for a high voltage feedthrough, according to the disclosure. **FIG. 3B** depicts a side cross-sectional view of the bushing of FIG. 3A as installed in a housing to form a high voltage feedthrough.

The bushing 304 may have a generally T-shaped cross-section. The wider portion of the bushing 304 may be accommodated in a recess R of a PDU housing 300, which may be an aluminum material. The wider portion of the bushing 304 is provided so that a fastener 308, such as a bolt, screw, or other fastener, may be applied through the wider portion to adhere the bushing 304 to a PDU housing 300. In addition, an O-ring 306 may be provided to provide sealing of the bushing 304 and housing 300.

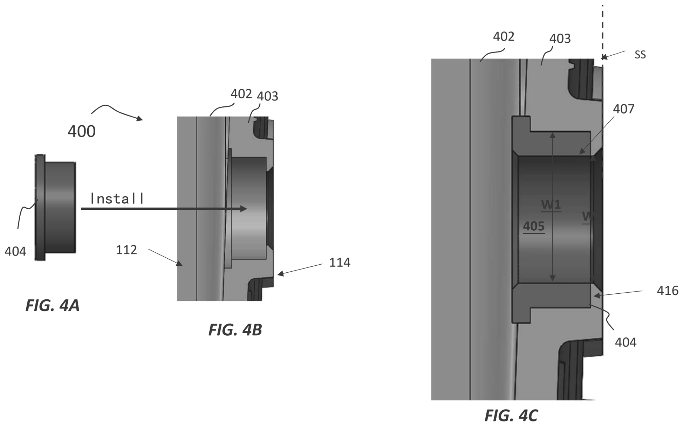

**FIG. 4A** depicts a side view of a bushing 404 for a high voltage feedthrough, , while **FIG. 4B** depicts a side cross-sectional view of a portion of a chamber wall 402 to accommodate the bushing of FIG. 4A to form a high voltage feedthrough. **FIG. 4C** depicts a side cross-sectional view of the chamber wall 402 with the bushing 404 of FIG. 4A installed. A feedthrough portion 403 may be provided that extends outside of the chamber wall 402. As in the case of FIG. 1A, an outer portion 416 of the feedthrough portion 403 is provided. The outer portion 416 extends over the outer surface of the bushing 404.

The bushing 404 may be installed by placing the bushing 404 in the feedthrough portion 403 from the inside of the chamber wall 402 as suggested in FIG. 4A. For example, the feedthrough portion 403 may have an outer portion 416 that defines a cavity 405 having a first width W1 or diameter that accommodates the bushing 404, and may have a lip or ridge that defines a second opening smaller that has a smaller width W2 or diameter so that the bushing is retained against the ridge after inserting into the cavity.

The bushing 404 may be fastened to the feedthrough portion 403 using a thread locker. Thus, the housing 400 is not overmolded around the bushing 404. Therefore, the inner surface 407 of the hole defined by the bushing 404 may be threaded before placement of the bushing in the feedthrough portion 403. Moreover, the outer sealing surface SS may be formed just of the material of housing 400, such as aluminum, thus providing a better sealing surface.

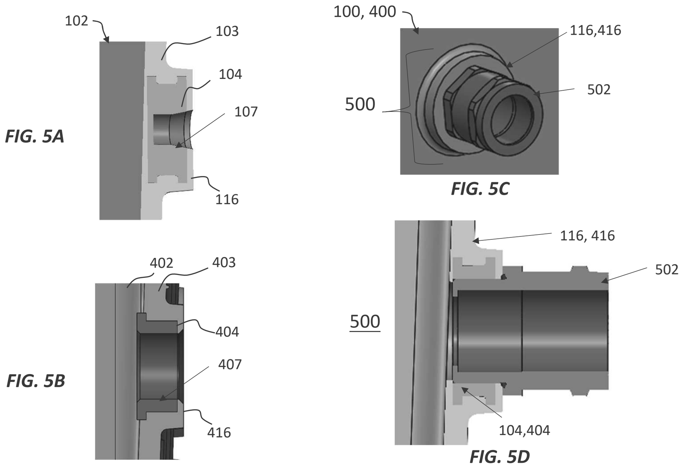

**FIG. 5A** depicts a side cross-sectional view of a high voltage feedthrough having a first bushing according to the disclosure. **FIG. 5B** depicts a side cross-sectional view of a high voltage feedthrough having a second bushing according to the disclosure. **FIG.5C** depicts a perspective view of a high voltage feedthrough 500, including an external gland, according to the disclosure. **FIG.5D** depicts a side cross-sectional view of one variant of the high voltage feedthrough of FIG. 5C.

Note that the inner surface 107 of bushing 104 is threaded, and the inner surface 407 of bushing 404 is also threaded. Subsequently, the housing 100 or housing 400 may be joined to an external gland 502 (such as a copper material) that is threaded to the bushing 104 or bushing 404, as depicted in FIG. 5C. While FIG. 5D specifically depicts assembly of the external gland 502 to a bushing 104, the same general assembly of bushing 404 and external gland 502 will apply.

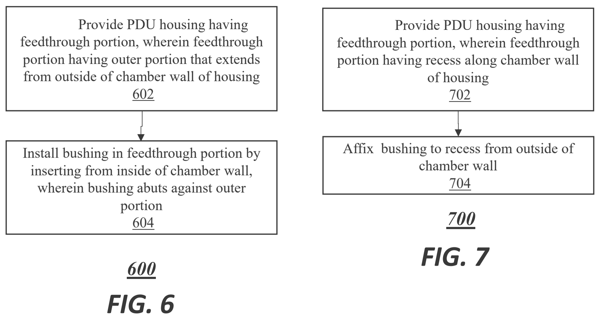

**FIG. 6** provides another exemplary process flow 600. At block 602, a PDU housing is provided that includes a feedthrough portion. The feedthrough portion may include an outer portion that extends from the outside of a chamber wall of the PDU housing. The PDU housing may be made of an aluminum material, such as pure aluminum metal or an aluminum alloy.

At block 604, a bushing is installed in the feedthrough portion by inserting the bushing from inside of the chamber wall. The bushing may be installed such that the bushing abuts against an inside surface of the outer portion. For example, the outer portion may define a cavity having a first width or diameter that accommodates the bushing, and may have a lip or ridge that defines a second opening smaller that has a smaller width or diameter so that the bushing is retained against the ridge after inserting into the cavity.

**FIG. 7** provides a further exemplary process flow 700. At block 702, a PDU housing provided having feedthrough portion. The feedthrough portion may have a recess along a chamber wall of the housing. At block 704, a bushing is affixed to the recess from an outside of the chamber wall.

## Claims

1. A housing for an electrical device or electronic device, comprising:
a chamber wall;
a feedthrough portion, attached to the chamber wall; and
a bushing, disposed within the feedthrough portion, and defining a high voltage passage therethrough.

2. The housing of claim 1, wherein the housing is formed of an aluminum material.

3. The housing of claim 1 or 2, the bushing being formed of a steel material.

4. The housing of any of the preceding claims, wherein the bushing is fastened to the feedthrough portion through an outer side of the chamber wall.

5. The housing of any of the preceding claims, wherein the bushing is inserted into the feedthrough portion through an inner side of the chamber wall.

6. The housing of any of the preceding claims, wherein a portion of the feedthrough portion is overmolded around the bushing.

7. The housing of any of the preceding claims, wherein an external side of the feedthrough portion is disposed flush with an outer side of the bushing.

8. A power distribution unit, comprising:
a housing according to any of the preceding claims; and
a set of components, disposed within the housing.

9. A method of forming a housing for a power distribution unit (PDU), comprising:
forming a PDU housing, wherein the PDU housing includes feedthrough portion, wherein the PDU housing comprises a first material; and
installing a bushing in the feedthrough portion, wherein the bushing comprises a second material that has a hardness greater than the first material.

10. The method of claim 9, wherein the PDU housing comprises an aluminum material, and wherein the bushing comprises a steel material.

11. The method of claim 9 or 10, wherein an external side of the feedthrough portion is disposed flush with an outer side of the bushing.

12. The method of any of the claims 9-11, wherein the bushing is installed in the feedthrough portion during the forming of the PDU housing.

13. Use of a power distribution unit according to claim 8, or a housing according to any of the claims 1-7 for delivering power to a load.

14. Use according to claim 13, wherein the load is within an electrical vehicle.

15. An electrical vehicle comprising a power distribution unit according to claim 8 or a housing according to any of the claims 1-7.
